# EUROPÄISCHE PATENTANMELDUNG

(11) **EP 2 924 793 A1**
(43) Veröffentlichungstag der Anmeldung: **30.09.2015**
(21) Anmeldenummer: 15158238.4
(22) Anmeldetag: 09.03.2015
(51) Int. Cl.: H01M 8/24, H01M 8/04, H01M 8/02, H01M 4/86, H01M 8/10

(54) **Brennstoffzelle mit verbessertem Wärmehaushalt**

(30) Priorität: 24.03.2014 EP 14161250
(71) Anmelder: Siemens Aktiengesellschaft, 80333 München (DE)
(72) Erfinder: Brandt, Torsten, 91301 Forchheim (DE); Hammerschmidt, Albert, 91056 Erlangen (DE); Latzel, Silke, 91077 Kleinsendelbach (DE); Lersch, Josef, 91336 Heroldsbach (DE)

(57) **Zusammenfassung**

Die Erfindung betrifft eine Brennstoffzelle (2) umfassend eine Elektrode (8), eine Bipolarplatte (14) sowie eine dazwischen positionierte Gasführungsschicht (10), wobei die Elektrode (8), die Gasführungsschicht (10) und die Bipolarplatte (14) in einer Stapelrichtung (4) gesehen aufeinander folgend angeordnet sind und wobei ein elektrischer Übergangswiderstand für den Übergang zwischen der Elektrode (8) und der Bipolarplatte (14) derart vorgegeben ist, dass dieser quer zur Stapelrichtung (4) variiert. Die Erfindung betrifft außerdem einen Brennstoffzellen-Stapel aus entsprechenden Brennstoffzellen.

## Beschreibung

Die Erfindung betrifft eine Brennstoffzelle umfassend eine Elektrode, eine Bipolarplatte sowie eine dazwischen positionierte Gasführungsschicht, wobei die Elektrode, die Gasführungsschicht und die Bipolarplatte in einer Stapelrichtung gesehen nebeneinander angeordnet sind und wobei ein elektrischer Übergangswiderstand für den Übergang zwischen der Elektrode und der Bipolarplatte gegeben ist. Die Erfindung betrifft außerdem einen Brennstoffzellen-Stapel aus entsprechenden Brennstoffzellen.

Brennstoffzellen werden in den verschiedensten Anwendungsbereichen eingesetzt, um mit deren Hilfe elektrische Energie zu generieren und so die Versorgung von elektrischen Antrieben oder anderen elektrischen Verbrauchern sicherzustellen. Am bekanntesten und verbreitetesten ist hierbei die sogenannte Wasserstoff-Sauerstoff-Brennstoffzelle, bei der Wasserstoff einerseits und Sauerstoff andererseits für eine katalytische Redoxreaktion zwischen Wasserstoff und Sauerstoff kontinuierlich zugeführt wird. Die Brennstoffzelle arbeitet dabei als galvanische Zelle und dementsprechend wird die bei der Redoxreaktion freiwerdende chemische Energie zumindest teilweise in elektrische Energie umgewandelt, die sich zur Verrichtung von Arbeit nutzen lässt.

Aufgebaut ist eine solche Brennstoffzelle typischerweise aus zwei Elektroden, eine die beiden Elektroden voneinander trennende semipermeable Membran sowie zwei Gasführungsschichten oder Gasdifussionsschichten. Mittels der Gasführungs- bzw. Gasdifussionsschichten werden die typischerweise gasförmig zugeführten Reaktionspartner gezielt zu den jeweiligen Elektroden hin geführt, wobei die zur Verfügung stehenden Oberflächen der Elektroden möglichst gleichmäßig angeströmt werden. An den Elektroden, die aus einem Katalysatormaterial bestehen oder mit einem solchen beschichtet sind, laufen dann die katalytischen Teilreaktionen der Redoxreaktion nach an sich bekanntem Prinzip ab.

Unter anderem wird dabei auch ein Teil der freiwerdenden chemischen Energie in thermische Energie umgewandelt. Die hierdurch bedingte Erwärmung der Brennstoffzelle ist prinzipiell ungünstig und kann sogar zu einer Überhitzung führen, aufgrund derer die Brennstoffzelle beschädigt wird. Das Risiko für eine Überhitzung ist dabei besonders hoch, wenn eine Vielzahl an Brennstoffzellen, so wie dies in den meisten Anwendungsfällen üblich ist, aneineinandergereiht oder gestapelt und in Reihe geschaltet werden. In einer solchen Baugruppe aus Brennstoffzellen, üblicherweise als "Stack" bezeichnet, kommt es mitunter zu einem Wärmestau und/oder zu lokalen Wärmekonzentrationen, so dass in einigen Bereichen im Betrieb besonders hohe Temperaturen auftreten. Derartige Bereiche sind dann besonders gefährdet und in diesen Bereichen treten am ehesten Beschädigungen auf.

Ausgehend hiervon liegt der Erfindung die Aufgabe zugrunde, eine vorteilhaft ausgestaltete Brennstoffzelle sowie einen vorteilhaft ausgestalteten Brennstoffzellen-Stapel anzugeben.

Diese Aufgabe wird erfindungsgemäß durch eine Brennstoffzelle mit den Merkmalen des Anspruchs 1 sowie durch einen Brennstoffzellen-Stapel mit den Merkmalen des Anspruchs 12 gelöst. Die rückbezogenen Ansprüche beinhalten teilweise vorteilhafte und teilweise für sich selbst erfinderische Weiterbildungen dieser Erfindung.

Eine entsprechende Brennstoffzelle umfasst dabei eine Elektrode, eine Bipolarplatte sowie eine zwischen Elektrode und Bipolarplatte positionierte Gasführungsschicht oder Gasdiffusionsschicht. Hierbei sind die Elektrode, die Gasführungs- bzw. Gasdiffusionsschicht und die Bipolarplatte in einer Stapelrichtung gesehen aneinandergereiht oder nebeneinander angeordnet und für den Übergang zwischen der Elektrode und der Bipolarplatte ist ein elektrischer Übergangswiderstand derart vorgegeben, dass der elektrische Übergangswiderstand, also der elektrische Übergangswiderstand in Stapelrichtung, quer zur Stapelrichtung variiert. Mit Hilfe dieser Variation ist es möglich, im Betrieb der Brennstoffzelle auftretende und unerwünschte Temperaturunterschiede zumindest teilweise zu kompensieren und/oder lokale Überhitzungen in der Brennstoffzelle zu vermeiden.

Dabei gilt es zu bedenken, dass thermische Energie oder Abwärme nicht nur durch die chemische Reaktion in der Brennstoffzelle generiert wird, sondern auch durch den elektrischen Strom, der durch die Redoxreaktion in der Brennstoffzelle angetrieben wird. Dabei bedingt insbesondere der bei einer Brennstoffzelle in einem Brennstoffzellen-Stapel zwischen Elektrode und Bipolarplatte fließende Strom eine Generierung von thermischer Energie in diesem Bereich, wobei die generierte Wärmemenge vom Übergangswiderstand zwischen der Elektrode und der Bipolarplatte abhängt. Durch eine vorgegebene ortsabhängige Variation dieses Übergangswiderstandes, also durch eine Vorgabe unterschiedliche Übergangswiderstände in unterschiedlichen Bereichen, lässt sich die pro Zeiteinheit generierte Wärmemenge ortsabhängig vorgeben und so auch limitieren. Die Variation der Übergangswiderstände erfolgt hierbei zweckdienlicherweise derart, dass lokale Überhitzungen und hierdurch bedingte Beschädigungen vermieden werden.

Die Variation des elektrischen Übergangswiderstandes innerhalb der Brennstoffzelle oder zumindest innerhalb eines Brennstoffzellen-Stapels, wird dabei bevorzugt derart vorgegeben, dass der größte lokale elektrische Übergangswiderstand in Stapelrichtung wenigstens doppelt so groß ist, wie der kleinste lokale elektrische Übergangswiderstand in Stapelrichtung. Weiter bevorzugt unterscheiden sich die beiden Werte mindestens um den Faktor 10.

Außerdem erfolgt die Variation des elektrischen Übergangswiderstandes in Stapelrichtung gemäß einer bevorzugten Ausgestaltung lediglich in einer Richtung, also in einer Variationsrichtung, quer zur Stapelrichtung, wohingegen der elektrische Übergangswiderstand in einer Richtung senkrecht zur Variationsrichtung und senkrecht zur Stapelrichtung nicht gezielt variiert wird und somit im Wesentlichen konstant ist.

Eine derartige Brennstoffzelle ist dabei, wie bereits angedeutet, typischerweise Teil einer als Brennstoffzellen-Stapel oder auch "Stack" bezeichneten Baugruppe, in welcher typischerweise mehrere im Wesentlichen gleichartig aufgebaute Brennstoffzellen in der Stapelrichtung aneinandergereiht oder übereinandergestapelt und in Reihe geschaltet sind. Hierbei sind jeweils zwei benachbarte Brennstoffzellen durch eine gemeinsame Bipolarplatte gasdicht gegeneinander abgetrennt und elektrisch leitend miteinander verbunden. Infolge dessen fließt dann in einer jeden Brennstoffzelle ein Strom in Stapelrichtung von einer Elektrode zu einer Bipolarplatte, wobei in Abhängigkeit des lokalen elektrischen Übergangswiderstandes zwischen der Elektrode und der Bipolarplatte thermische Energie generiert wird und wobei der elektrische Übergangswiderstand quer zur Stapelrichtung variiert.

Die Variation quer zur Stapelrichtung ist dabei bevorzugt derart gestaltet, dass der Übergangswiderstand entlang einer Richtung quer zur Stapelrichtung betrachtet über eine bestimmte Strecke hinweg im Wesentlichen konstant bleibt, dann sprunghaft ansteigt und nachfolgend wieder über eine bestimmte Strecke hinweg im Wesentlichen konstant bleibt. Dabei sind über die gesamte Ausdehnung der Brennstoffzelle quer zur Stapelrichtung hinweg gemäß einer Ausgestaltungsvariante mehrere derartige sprunghafte Übergänge gegeben, wohingegen im einfachsten Fall lediglich ein solcher Übergang infolge der Gestaltung der Brennstoffzelle vorgegeben ist. Alternativ ist es vorgesehen, einen fließenden Übergang, also einen allmählichen Anstieg des Übergangswiderstandes entlang einer Richtung quer zur Stapelrichtung vorzugeben.

Von Vorteil ist des Weiteren, wenn die Brennstoffzelle oder zumindest die Baugruppe aus mehreren Brennstoffzellen, also der Brennstoffzellen-Stapel, für eine aktive Kühlung ausgebildet ist. Infolge einer solchen aktiven Kühlung stellt sich typischerweise, zumindest im Falle einer Ausgestaltung der Brennstoffzelle bzw. des Brennstoffzellen-Stapels nach dem Stand der Technik, im Betrieb eine ortsabhängige Temperaturverteilung ein, so dass in einigen Bereichen in der Brennstoffzelle bzw. des Brennstoffzellen-Stapels eine höhere Temperatur gegeben ist und in anderen Bereichen eine geringere Temperatur. Grund hierfür ist der Umstand, dass sich die Temperatur eines eingesetzten Kühlmittels auf dem Weg durch die Brennstoffzelle bzw. den Brennstoffzellen-Stapel allmählich erhöht.

Das Kühlmittel wird dabei in der Regel quer zur Stapelrichtung durch die Brennstoffzelle bzw. durch die Brennstoffzellen eines Brennstoffzellen-Stapels hindurchgeführt, wobei hierzu üblicherweise eine Anzahl von Kühlkanälen vorgesehen ist. Im Falle eines Brennstoffzellen-Stapels sind die Kühlkanäle der einzelnen Brennstoffzellen in einigen Fällen zudem miteinander verbunden, so dass das Kühlmittel dann beispielsweise stets von einem Austrittsbereich einer Brennstoffzelle zu einem Eintrittsbereich der benachbarten Brennstoffzelle geführt und somit quasi mäanderförmig durch den gesamten Brennstoffzellen-Stapel hindurchgeführt wird. Das Kühlmittel ist in diesem Fall somit entlang eines Weges von einem oberen Eintrittsbereich des Brennstoffzellen-Stapels zu einem unteren Austrittsbereich des Brennstoffzellen-Stapels geführt, wobei sich das Kühlmittel nicht nur innerhalb einer jeden Brennstoffzelle sondern auch von Brennstoffzelle zu Brennstoffzelle allmählich erwärmt. Daher erfolgt bevorzugt bei einem solchen Brennstoffzellen-Stapel zusätzlich zur Variation des elektrischen Übergangswiderstands quer zur Stapelrichtung innerhalb einer jeden Brennstoffzelle auch eine Variation in Stapelrichtung, also von Brennstoffzelle zu Brennstoffzelle, so dass der elektrische Übergangswiderstand entlang des Weges des Kühlmittels vom oberen Eintrittsbereich des Brennstoffzellen-Stapels zum unteren Austrittsbereich des Brennstoffzellen-Stapels und nicht nur entlang des Weges des Kühlmittels innerhalb der Brennstoffzellen zunimmt. Bevorzugt wird jedoch eine Ausgestaltung des Brennstoffzellen-Stapels, bei der die Kühlmittelführung einfacher gestaltet ist und bei der das Kühlmittel nicht nach und nach durch die Brennstoffzellen des Brennstoffzellen-Stapels geführt wird, sondern verteilt auf die Brennstoffzellen parallel oder gleichzeitig durch die Brennstoffzellen hindurchgetrieben wird. Infolgedessen weisen die Brennstoffzellen des Brennstoffzellen-Stapels alle ein vergleichbares Temperaturprofil auf und die Temperaturunterschiede zwischen den Brennstoffzellen sind, zumindest im Vergleich zu den Temperaturdifferenzen innerhalb der Brennstoffzellen, vernachlässigbar.

Vorteilhafterweise ist nun bei einer hier vorgestellten Brennstoffzelle bzw. einer Baugruppe aus entsprechenden Brennstoffzellen in einem Bereich mit hoher Kühlmittel-Temperatur ein höherer Übergangswiderstand realisiert, so dass in diesem Bereich die im Betrieb gegebene Stromdichte und die davon abhängige Generierung von thermischer Energie reduziert ist. Günstig ist es hierbei insbesondere, wenn zumindest eine Bipolarplatte, bevorzugt jede Bipolarplatte, für eine aktive Kühlung ausgebildet ist. In diesem Fall wird dann in einem Bereich jeder Bipolarplatte, die für eine aktive Kühlung ausgebildet ist, ein variierender elektrischer Übergangswiderstand realisiert, so dass in einem Bereich, in dem sich im Betrieb üblicherweise eine höhere Kühlmitteltemperatur einstellt, ein höherer elektrischer Übergangswiderstand vorgegeben ist. Der elektrische Übergangswiderstand ist dabei bevorzugt in diesem Bereich um mindestens 50 % und weiter bevorzugt um mindesten 500 % erhöht. Auf diese Weise lassen sich sehr gezielt Wärmekonzentrationen innerhalb sowohl einer einzelnen Brennstoffzelle als auch innerhalb der Baugruppe aus mehreren Brennstoffzellen vermeiden.

Zweckmäßigerweise ist außerdem in einem ersten Bereich, insbesondere einem ersten Randbereich, zumindest einer Bipolarplatte ein Kühlmittelzulauf und in einem zweiten Bereich, insbesondere einem zweiten Randbereich, dieser Bipolarplatte oder einer anderen Bipolarplatte ein Kühlmittelablauf für die aktive Kühlung gegeben. In diesem Fall ist dann in dem zweiten Bereich mit dem Kühlmittelablauf ein höherer elektrischer Übergangswiderstand realisiert. Dabei gilt es zu bedenken, dass die Temperatur der aktiven Kühlung im Bereich des Kühlmittelablaufs am höchsten sein kann und dementsprechend ist es günstig gerade hier für eine möglichst geringe Generierung von thermischer Energie zu sorgen, um eine kritische Erwärmung, also insbesondere eine lokale Überhitzung innerhalb des Bauteils zu vermeiden.

Um den technischen Aufwand für die Realisierung unterschiedlicher Übergangswiderstände möglichst gering zu halten, werden die unterschiedlichen elektrischen Übergangswiderstände bevorzugt mittels eines eingebrachten Isoliermaterials, insbesondere auf der Basis eines Polymers, realisiert. Dabei lässt sich der Wert des elektrischen Übergangswiderstandes beispielsweise durch die pro Volumeneinheit eingebrachte Menge an Isoliermaterial vorgeben.

Zweckdienlich ist es weiter, wenn als Basismaterial für die Gasführungsschicht oder die Gasdiffusionsschicht ein Kohlefasermaterial, also beispielsweise ein Kohlefaserflies, eingesetzt ist. Bevorzugt wird hierbei insbesondere ein Kohlepapier genutzt.

Von Vorteil ist es zudem, wenn das Basismaterial und insbesondere das Kohlepapier einer Nachbehandlung unterzogen wird, insbesondere um die Oberfläche hydrophob zu gestalten. Dies ist insbesondere dann von Vorteil, wenn im Rahmen der Redoxreaktion in der Brennstoffzelle Wasser gebildet wird, welches dann aus der Gasführungs- bzw. Gasdiffusionsschicht und aus der Brennstoffzelle herausgeführt werden muss. Bevorzugt wird dabei für die Nachbehandlung des Basismaterials eine Polymerlösung genutzt. Die Polymerlösung wird dabei beispielweise auf das Basismaterial aufgesprüht oder auf eine andere Weise insbesondere großflächig aufgetragen oder aber das Basismaterial wird in ein Bad mit einer entsprechenden Polymerlösung eingetaucht. Nachfolgend wird dafür gesorgt, dass das Lösungsmittel verdunstet.

In vorteilhafter Weiterbildung wird hierbei ein Polymer genutzt, welches elektrisch isolierend wirkt. In diesem Fall lässt sich dann die ohnehin vorgesehene Nachbehandlung gleichzeitig nutzen, um unterschiedliche Übergangswiderstände zu realisieren, indem die Polymermenge pro Volumeneinheit lokal variiert wird. Dies lässt sich auf einfache Weise dadurch erreichen, indem für unterschiedliche Bereiche unterschiedliche Polymerlösungen verwendet werden, die sich hinsichtlich der Konzentration des gelösten Polymers unterscheiden oder aber indem die Nachbehandlung in verschiedenen Bereichen unterschiedlich häufig ausgeführt wird.

Im Falle eines Kohlepapiers als Basismaterial bedingt eine solche Nachbehandlung beispielsweise die Ausbildung einer Oberflächenbeschichtung und durch eine Variation der Anzahl an Nachbehandlungen lassen sich auf relativ einfache Weise unterschiedlich starke Beschichtungen realisieren, also unterschiedliche Schichtdicken. Im einfachsten Fall wird also beispielsweise ein Kohlepapier zunächst in ein Bad mit einer Polymerlösung vollständig eingetaucht. Anschließend erfolgt eine Trocknung, bei der das Lösungsmittel verdunstet und sich beidseitig auf dem Kohlepapier jeweils eine Polymerschicht ausbildet. Im Zuge einer weiteren Nachbehandlung wird dann das Kohlepapier mit der Polymerbeschichtung zur Hälfte erneut in das Bad mit der Polymerlösung getaucht und anschließend wiederum getrocknet. Infolgedessen ist dann das Kohlepapier im Bereich der einen Hälfte mit einer einfachen beidseitigen Polymerbeschichtung versehen, wohingegen die andere Hälfte auf beiden Seiten eine Polymerbeschichtung mit jeweils doppelter Schichtdicke aufweist. In dieser Hälfte mit der jeweils doppelten Schichtdicke ist dann ein signifikant höherer Übergangswiderstand realisiert.

Analog zu diesem Ausführungsbeispiel erfolgt die Vorgabe unterschiedlicher elektrischer Übergangswiderstände vorteilhafterweise durch die Realisierung unterschiedlicher Schichtdicken einer Polymerbeschichtung, wobei die Schichtdicke in Stapelrichtung quer zur Stapelrichtung variiert.

Gemäß einer weiter bevorzugten Ausgestaltungsvariante ist die Brennstoffzelle als sogenannte Wasserstoff-Sauerstoff-Brennstoffzelle ausgebildet und weist zweckdienlicherweise zwei Elektroden und eine die Elektroden trennende semipermeable protonenleitende Polymer-Membran auf. Die Polymer-Membran bildet dann zusammen mit den beiden Elektroden eine sogenannte Membranelektrodeneinheit aus. Zudem sind die beiden Elektroden vorteilhafterweise jeweils durch eine einseitige Platinbeschichtung der Polymer-Membran ausgebildet. Auf diese Weise lassen sich Brennstoffzellen mit recht kompakten Abmessungen realisieren und zudem vergleichsweise hohe Wirkungsgrade erzielen.

Die Grundidee der Erfindung ist also vereinfacht ausgedrückt darin zu sehen, dass in bestimmten stromleitenden Bereichen innerhalb der Brennstoffzelle, in denen der Wärmeabtransport von generierter Wärme, beispielsweise durch eine aktive Kühlung, weniger effektiv erfolgt, dafür gesorgt wird, dass dort im Betrieb auch weniger Wärme anfällt. Hierzu wird der elektrische Widerstand in diesen Bereichen quasi künstlich erhöht, wodurch die Stromdichte abgesenkt wird. Die geringere Stromdichte wiederum bedingt dann eine geringere Generierung von thermischer Energie. Betroffen ist hierbei insbesondere der Übergang zwischen der Gasführungsschicht oder Gasdiffusionsschicht und der Bipolarplatte, welche typischerweise aktiv gekühlt ist, und zur Variation des Übergangswiderstandes zwischen der Gasführungs- bzw. Gasdiffusionsschicht und der Bipolarplatte wird die Schichtdicke einer in der Regel ohnehin vorgesehen Polymerbeschichtung der Gasführungs- bzw. Gasdiffusionsschicht angepasst oder variiert.

Diese Grundidee lässt sich dabei problemlos auch auf einen Brennstoffzellen-Stapel aus entsprechenden Brennstoffzellen übertragen. Je nach Aufbau eines entsprechenden Brennstoffzellen-Stapels und insbesondere je nach Ausgestaltung der aktiven Kühlung des Brennstoffzellen-Stapels ist es dabei nicht nur vorgesehen, den Übergangswiderstand innerhalb der einzelnen Brennstoffzellen zu variieren, sondern bei Bedarf auch den Übergangswiderstand von Brennstoffzelle zu Brennstoffzelle zu verändern. Ist also beispielsweise die aktive Kühlung derart ausgestaltet, dass ein Kühlmittel nacheinander durch mehrere Brennstoffzellen geführt ist, so wird sich das Kühlmittel im Betrieb des Brennstoffzellen-Stapels von Brennstoffzelle zu Brennstoffzelle zunehmend erwärmen, wodurch die Kühlung von Brennstoffzelle zu Brennstoffzelle geringer ausfällt. Zur Anpassung an diesen Effekt wird dann quasi entlang des Weges des Kühlmittels durch den Brennstoffzellen-Stapel der elektrische Übergangswiderstand allmählich erhöht, wodurch nicht nur innerhalb der einzelnen Brennstoffzellen unterschiedliche Übergangswiderstände vorgegeben werden, sondern auch unterschiedliche Übergangswiderstände für unterschiedliche Brennstoffzellen entlang des Weges des Kühlmittels. Die Variation des elektrischen Übergangswiderstandes zwischen der Gasführungsschicht bzw. der Gasdiffusionsschicht und der Bipolarplatte, also des Übergangswiderstandes in Stapelrichtung, erfolgt dann wiederum durch Variation der Stärke der Polymerbeschichtung, allerdings erfolgt die Variation in diesem Fall nicht einfach entlang einer Richtung quer zur Stapelrichtung, sondern quer zur Stapelrichtung entlang der Führung des Kühlmittels.

Sieht man von den in einigen Fällen unterschiedlich stark ausgeführten Polymerbeschichtungen ab, so sind die einzelnen Brennstoffzellen im Brennstoffzellen-Stapel bevorzugt im Wesentlichen identisch gestaltet und dementsprechend ist der Brennstoffzellen-Stapel bevorzugt aus einer Anzahl Bipolarplatten, Gasführungsschichten und Membranelektrodeneinheiten aufgebaut, wobei jede Membranelektrodeneinheit, wie bereits zuvor erwähnt, durch eine semipermeable Polymer-Membran und zwei Elektroden, die die Polymer-Membran voneinander trennt, ausgebildet ist. In diesem Fall umfasst der Brennstoffzellen-Stapel insbesondere keine weiteren Schichten oder Beschichtungen und zwei benachbarte Brennstoffzellen teilen sich eine gemeinsame Bipolarplatte, die die beiden Brennstoffzellen elektrisch leitend miteinander verbindet und gasdicht gegeneinander abtrennt.

Ausführungsbeispiele der Erfindung werden nachfolgend anhand einer schematischen Zeichnung näher erläutert. Darin zeigen:
- FIG 1: in einer Schnittdarstellung mehrere aneinandergereihte Brennstoffzellen umfassend mehrere Gasdiffusionsschichten sowie
- FIG 2: in einer Aufsicht eine der Gasdiffusionsschichten.

Einander entsprechende Teile sind in allen Figuren jeweils mit den gleichen Bezugszeichen versehen.

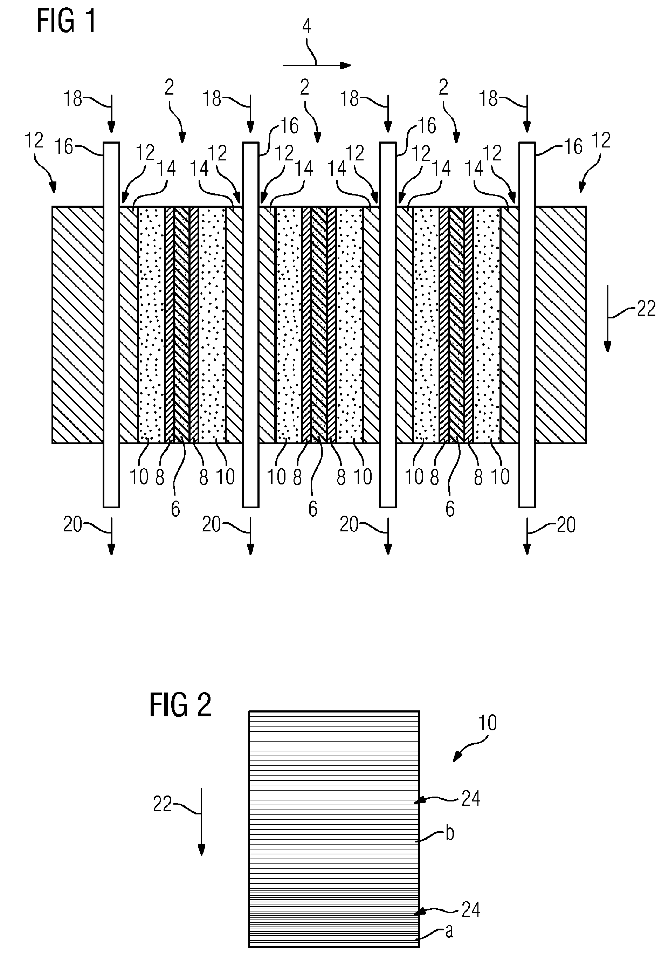

Ein nachfolgend exemplarisch beschriebener und in FIG 1 schematisch wiedergegebener Brennstoffzellen-Stapel ist aus drei im Wesentlichen identisch gestalteten Wasserstoff-Sauerstoff-Brennstoffzellen 2, nachfolgend kurz Brennstoffzellen 2 genannt, aufgebaut.

Die Brennstoffzellen 2 sind dabei in einer Stapelrichtung 4 aneinandergereiht und umfassen jeweils eine Membranelektrodeneinheit aus einer semipermeablen protonenleitenden Polymer-Membran 6, welche beidseitig mit einer Platinbeschichtung 8 zur Ausbildung zweier Elektroden versehen ist. An jede Platinbeschichtung 8 grenzt eine Gasdiffusionsschicht 10, über welche ein gasförmiger Reaktionspartner, also entweder Wasserstoff oder Sauerstoff, zugeführt wird, so dass der entsprechende Reaktionspartner stets in ausreicheder Menge und gleichmäßig verteilt über die gesamte Oberfläche an der angrenzenden Platinbeschichtung 8 zur Verfügung steht. An den Platinbeschichtungen 8 laufen dann nach an sich bekanntem Prinzip die katalytischen Teilreaktionen der Redoxreaktion zwischen Wasserstoff und Sauerstoff ab.

Weiter ist jede Brennstoffzelle 2 in einer Art Gehäuse untergebracht, welches die Brennstoffzelle 2 gasdicht einschließt und durch Metallplatten 12 gebildet wird. Dabei sind jeweils zwei benachbarte Brennstoffzellen 2 durch eine gemeinsame als Bipolarplatte 14 ausgebildete Metallplatte 12 gasdicht gegeneinander abgetrennt und elektrisch leitend miteinander verbunden. Hierdurch sind die Brennstoffzellen 2 elektrisch leitend in Reihe geschaltet und bilden somit einen Batterieverbund oder den Brennstoffzellen-Stapel aus.

In die Metallplatten 12, also auch in die Bipolarplatten 14, sind weiter Kühlkanäle 16 eingearbeitet, durch welche im Betrieb ein Kühlmittel zur aktiven Kühlung der Brennstoffzellen 2 geleitet wird. Dabei ist jedem Kühlkanal 16 durch unterschiedlich ausgestaltete Anschlüsse ein Kühlmittelzulauf 18 einerseits und ein Kühlmittelablauf 20 andererseits zugeordnet, so dass das Kühlmittel im Rahmen der aktiven Kühlung jeden Kühlkanal 16 in einer vorbestimmten Kühlmittelrichtung 22 durchströmt.

Dabei nimmt die Temperatur des Kühlmittels vom Kühlmittelzulauf 18 ausgehend in Richtung des Kühlmittelablaufs kontinuierlich zu und dementsprechend wird durch die aktive Kühlung unterschiedlichen Bereichen innerhalb einer jeden Brennstoffzelle 2 unterschiedlich viel Wärme pro Zeiteinheit entzogen.

Um zu verhindern, dass in den Bereichen einer jeden Brennstoffzelle 2, in denen besonders wenig Wärme durch die aktive Kühlung abtransportiert wird, also insbesondere im Bereich des Kühlmittelablaufs 20, eine Überhitzung auftritt, ist der Übergangswiderstand zwischen einer jeden Metallplatte 12, also einer jeden Bipolarplatte 14, und einer zugeordneten durch eine Platinbeschichtung 8 ausgebildeten Elektrode und insbesondere zwischen einer jeden Bipolarplatte 14 und der angrenzenden Gasdiffusionsschicht 10 im Bereich des Kühlmittelablaufs 20 erhöht. Infolgedessen ist dann die Stromdichte in diesem Bereich im Betrieb reduziert, wodurch auch die pro Zeiteinheit in diesem Bereich durch Stromfluss generierte Wärmemenge verringert ist.

Der im Bereich des Kühlmittelablaufs 20 realisierte erhöhte elektrische Übergangswiderstand ist dabei durch eine spezielle Gestaltung der Gasdiffusionsschichten 10 vorgegeben, wie dies in FIG 2 angedeutet ist. Dargestellt ist hier ein beidseitig mit einer Polymerbeschichtung 24 versehenes Kohlepapier, welches als Gasdiffusionsschicht 10 in den Brennstoffzellen 2 genutzt wird. Die Anordnung ist dabei derart, dass die Bildebene in FIG 2 einer Ebene quer zur Stapelrichtung 4 in FIG 1 entspricht.

Mittels der unterschiedlichen Schraffierungen sind zwei Bereiche angedeutet, in denen die Polymerbeschichtung 24 unterschiedlich dick ausgeführt ist, wobei die Schichtdicke a dieser Polymerbeschichtung 24 in dem kleineren, in der Darstellung unten positionierten, Bereich stärker ausgeführt ist als im oberen Bereich. Dieser untere Bereich mit der größeren Schichtdicke a ist innerhalb der Brennstoffzellen 2 jeweils im Bereich des Kühlmittelablaufs 20 positioniert, wohingegen der Bereich mit der geringeren Schichtdicke b im Bereich des Kühlmittelzulaufs 18 platziert ist.

Da die Polymerbeschichtung 24 eine elektrisch isolierende Wirkung hat, ist der elektrische Übergangswiderstand im Bereich mit der größeren Schichtdicke a größer als im Bereich mit der geringeren Schichtdicke b. Somit ist in diesem Ausführungsbeispiel eine Variation des elektrischen Übergangswiderstandes quer zur Stapelrichtung 4, und in diesem Fall entlang der Kühlmittelrichtung 22, derart gegeben, dass in zwei Bereichen zwei unterschiedliche Übergangswiderstandswerte vorgegeben sind.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

## Patentansprüche

1. Brennstoffzelle (2) umfassend eine Elektrode (8), eine Bipolarplatte (14) sowie eine dazwischen positionierte Gasführungsschicht (10), wobei die Elektrode (8), die Gasführungsschicht (10) und die Bipolarplatte (14) in einer Stapelrichtung (4) gesehen nebeneinander angeordnet sind und wobei ein elektrischer Übergangswiderstand für den Übergang zwischen der Elektrode (8) und der Bipolarplatte (14) gegeben ist, **dadurch gekennzeichnet, dass** der elektrische Übergangswiderstand derart vorgegeben ist, dass dieser quer zur Stapelrichtung (4) variiert.

2. Brennstoffzelle (2) nach Anspruch 1, **dadurch gekennzeichnet, dass** eine Variation des elektrischen Übergangswiderstandes derart vorgegeben ist, dass der größte lokale elektrische Übergangswiderstand in Stapelrichtung wenigstens doppelt so groß ist und insbesondere wenigstens zehnmal so groß ist, wie der kleinste lokale elektrische Übergangswiderstand in Stapelrichtung.

3. Brennstoffzelle (2) nach Anspruch 1 oder 2, **dadurch gekennzeichnet, dass** eine Variation des elektrischen Übergangswiderstandes derart vorgegeben ist, dass dieser quer zur Stapelrichtung (4) genau entlang einer Richtung quer zur Stapelrichtung (4) variiert.

4. Brennstoffzelle (2) nach einem der Ansprüche 1 oder 3, **dadurch gekennzeichnet, dass** in einem ersten Bereich der Bipolarplatte (14) ein Kühlmittelzulauf (18) und in einem zweiten Bereich der Bipolarplatte (14) ein Kühlmittelablauf (20) gegeben ist und dass in dem zweiten Bereich ein höherer elektrischer Übergangswiderstand vorgegeben ist.

5. Brennstoffzelle (2) nach einem der Ansprüche 1 bis 4, **dadurch gekennzeichnet, dass** unterschiedliche elektrische Übergangswiderstände mittels eines eingebrachten Isoliermaterials (24), insbesondere auf der Basis eines Polymers (24), realisiert sind.

6. Brennstoffzelle (2) nach einem der Ansprüche 1 bis 5, **dadurch gekennzeichnet, dass** als Basismaterial für die Gasführungsschicht (10) ein Kohlefasermaterial, insbesondere ein Kohlepapier, eingesetzt ist.

7. Brennstoffzelle (2) nach Anspruch 6, **dadurch gekennzeichnet, dass** das Basismaterial zur Einbringung oder zur Aufbringung eines Polymers (24), insbesondere zur Beschichtung mit einem Polymer (24), nachbehandelt ist.

8. Brennstoffzelle (2) nach einem der Ansprüche 1 bis 7, **dadurch gekennzeichnet, dass** zur Vorgabe unterschiedlicher elektrischer Übergangswiderstände die Schichtdicke (a,b) in Stapelrichtung (4) einer Polymerbeschichtung (24) unterschiedlich ausgebildet ist, so dass die Schichtdicke (a,b) quer zur Stapelrichtung (4) variiert.

9. Brennstoffzelle (2) nach einem der Ansprüche 1 bis 8, **dadurch gekennzeichnet, dass** diese zwei Elektroden (8) und eine die Elektroden (8) trennende semipermeable protonenleitende Polymer-Membran (6) umfasst.

10. Brennstoffzelle (2) nach einem der Ansprüche 1 bis 9, **dadurch gekennzeichnet, dass** diese als Wasserstoff-Sauerstoff-Brennstoffzelle (2) ausgebildet ist.

11. Brennstoffzelle (2) nach Anspruch 9 oder 10, **dadurch gekennzeichnet, dass** die beiden Elektroden (8) jeweils durch eine einseitige Platinbeschichtung (8) der semipermeablen Polymer-Membran (6) ausgebildet sind.

12. Brennstoffzellen-Stapel aus einer Anzahl von Brennstoffzellen nach einem der vorherigen Ansprüche, **dadurch gekennzeichnet, dass** dieser aus einer Anzahl Bipolarplatten (14), Gasführungsschichten (10) und Membranelektrodeneinheiten aufgebaut ist, wobei jede Membranelektrodeneinheit durch eine semipermeable Polymer-Membran (6) und zwei Elektroden (8), die die Polymer-Membran (6) voneinander trennt, ausgebildet ist.
